# EUROPÄISCHE PATENTSCHRIFT

(11) **EP 2 981 438 B1**
(45) Veröffentlichungstag und Bekanntmachung des Hinweises auf die Patenterteilung: **04.01.2017**
(21) Anmeldenummer: 14713499.3
(22) Anmeldetag: 31.03.2014
(51) Int. Cl.: B60R 16/033, H02J 7/14, G01C 21/34

(54) **VERFAHREN ZUM STEUERN EINES LADEZUSTANDS EINER FAHRZEUGBATTERIE**
METHOD FOR CONTROLLING A STATE OF CHARGE OF A VEHICLE BATTERY
PROCÉDÉ DE COMMANDE DE L'ÉTAT DE CHARGE D'UNE BATTERIE DE VÉHICULE

(30) Priorität: 03.04.2013 DE 102013205893
(43) Veröffentlichungstag der Anmeldung: 10.02.2016
(73) Patentinhaber: Bayerische Motoren Werke Aktiengesellschaft, 80809 München (DE)
(72) Erfinder: DEISLER, Christopher, 81673 München (DE)
(86) Internationale Anmeldenummer: PCT/EP2014/056428
(87) Internationale Veröffentlichungsnummer: WO 2014/161807

(56) Entgegenhaltungen:
- EP-A1- 2 177 389
- WO-A2-2013/113751
- DE-A1-102012 001 820

## Beschreibung

Die Erfindung bezieht sich auf ein Verfahren zum Steuern eines Ladezustands einer Fahrzeugbatterie zur Sicherstellung der Startfähigkeit des Fahrzeugs nach dem Oberbegriff des Patentanspruchs 1.

Die Startfähigkeit von Fahrzeugen hängt grundsätzlich von verschiedenen Zuständsfaktoren der Starterbatterie ab. Ein wesentlicher Zustandsfaktor ist dabei die Batterietemperatur beim Start des Fahrzeugs. Je niedriger die Batterietemperatur ist, desto höher muss der Ladezustand der Batterie sein, um ein Starten des Fahrzeugs gewährleisten zu können. Um die Startfähigkeit sicherstellen zu können, wird derzeit versucht, über eine Risikobewertung die niedrigste Batterietemperatur, die beim Start des Fahrzeugs vorliegen könnte, abzuschätzen. Zur Abschätzung der niedrigsten Temperatur werden die tiefste Temperatur während der Fahrzeugabstellzeit und die tiefste Temperatur während der Fahrt ermittelt und als sog. "worst case" für die Risikobewertung herangezogen. In Abhängigkeit von dieser abgeschätzten niedrigsten Batterietemperatur wird eine untere Ladezustandsgrenze der Fahrzeugbatterie bestimmt und die Ladungsmenge in der Fahrzeugbatterie so gesteuert, dass der Ladezustand der Batterie die untere Ladezustandsgrenze zumindest nicht unterschreitet. Eine zukünftige Temperaturentwicklung wird hierbei nicht berücksichtigt.

Aus der DE 10 2012 001 820 A1 ist bereits ein Verfahren zum Steuern eines Ladezustands einer Fahrzeugbatterie bekannt, wobei eine Batterietemperaturvorhersage für die Fahrzeugbatterie erzeugt wird und diese Batterietemperaturvorhersage dazu verwendet wird, um einen gewünschten (temperaturabhängigen) SOC-Bereich für die Fahrzeugbatterie zu bestimmen. Zum Erzeugen der Batterietemperaturvorhersage wird unter anderem eine vorhergesagte Außentemperatur an der aktuellen Position des Fahrzeugs von einer Telemätik empfangen, welche diese von einem Wetterdienst empfängt.

Nachteilig ist hierbei, dass selbst dann, wenn anhand der Telematikdaten sehr kühle Temperaturen vorhergesagt werden, die eine Anpassung des SÖC-Bereichs erfordern würde, der Ladezustand der Batterie beim maßgeblichen Abstellort nicht mehr in im ausreichenden Maße erhöht werden kann, da das Fahrzeug zeitnah abgestellt wird oder bereits abgestellt wurde.

Weitere Informationen zum technischen Umfeld sind in der EP 2 177 389 A1 zu entnehmen.

Aufgabe der Erfindung ist nun, ein hinsichtlich oben genannter Problematik verbessertes Verfahren zum Steuern eines Ladezustands einer Fahrzeugbatterie anzugeben.

Diese Aufgabe wird durch ein Verfahren nach Patentanspruch 1 gelöst. Vorteilhafte Weiterbildungen ergeben sich aus den abhängigen Ansprüchen. Das erfindungsgemäße Verfahren, sowie deren vorteilhafte Ausgestaltungen können mittels eines implementierten Algorithmus oder einer entsprechenden Baugruppenanordnung in einem dafür vorgesehenen Steuergerät durchgeführt werden.

Das erfindungsgemäße Verfahren zum Steuern eines Ladezustands einer Fahrzeugbatterie zur Sicherstellung der Startfähigkeit des Fahrzeugs ist grundlegend derart ausgestaltet, dass eine Batterietemperaturvorhersage für die Fahrzeugbatterie ermittelt wird, und diese Batterietemperaturvorhersage verwendet wird, um eine untere Ladezustandsgrenze der Fahrzeugbatterie zu bestimmen. Die Ladungsmenge in der Fahrzeugbatterie wird daraufhin so gesteuert, dass der Ladezustand der Batterie die untere Ladezustandsgrenze zumindest nicht unterschreitet.

Der Erfindung liegt nun die Erkenntnis zugrunde, dass bei dem aus der DE 10 2012 001 820 A1 bekannten Verfahren zwar eine (zeitlich gesehen) zukünftige Batterietemperaturvorhersage auf Basis bekannter Wetterdaten am aktuellen Standpunkt des Fahrzeugs erfolgt, dann aber unter Umständen erst sehr spät - ggf. zu spät - auf fallende Temperaturen reagiert werden kann. Dies kann dazu führen, dass die Startfähigkeit nicht mehr sichergestellt werden kann, da ein entsprechendes Laden der Batterie nicht mehr möglich ist, weil das Fahrzeug nicht mehr (lange genug) in Betrieb ist.

Um dieses Problem zu umgehen, sieht das erfindungsgemäße Verfahren vor, dass bei der Ermittlung der Batterietemperaturvorhersage Daten eines im Fahrzeug integrierten oder mit dem Fahrzeug gekoppelten Navigationssystems berücksichtigt werden. Vorteilhafterweise handelt es sich um solche Daten, die eine Aussage über die zukünftige Position des Fahrzeugs beinhalten oder ermöglichen. Diese Daten können einen relevanten Beitrag dazu leisten, dass bereits frühzeitig eine Batterietemperaturvorhersage in Bereichen erfolgt, bei denen die Sicherstellung der Startfähigkeit der Batterie relevant ist.

Vorteilhafterweise werden bei der Ermittlung der Batterietemperaturvorhersage insbesondere diejenigen Daten des Navigationssystems berücksichtigt, die einen Hinweis auf eine vermuteten Fahrzeugabstellposition beinhalten, da die Startfähigkeit gerade für diese Position des Fahrzeug sichergestellt werden muss. Hierzu können in einer vorteilhaften Weiterbildung bei der Ermittlung der Batterietemperaturvorhersage insbesondere Ziel-Positionsdaten einer geplanten oder einer aufgrund des Nutzerverhaltens des Fahrers vermuteten Route des Navigationssystems berücksichtigt werden.

Alternativ oder zusätzlich können bei der Ermittlung der Batterietemperaturvorhersage auch schon die Positionsdaten einer geplanten oder einer aufgrund des Nutzerverhaltens des Fahrers vermuteten Route berücksichtigt werden. Das Erkennen bzw. Vermuten der aufgrund des Nutzerverhaltens des Fahrers zu fahrende Route oder des Fahrziels kann bspw. durch eine Prognose des Fahrziels aufgrund des Nutzerverhaltens erfolgen. Bspw. kann im Fahrzeug bekannt sein, dass der Fahrer in einem bestimmten Zeitfenster, immer ein bestimmtes Ziel (z. B. Arbeitsstätte oder Wohnort) anfährt.

Bei den relevanten Daten des Navigationssystems kann es sich um verschiedene, routen- oder zielpositionsabhängige Daten handeln, d. h. in einer besonders vorteilhaften Weiterbildung der Erfindung werden die Daten des Navigationssystems bei der Ermittlung der Batterietemperaturvorhersage derart berücksichtigt, dass aktuelle oder vorhergesagte Außentemperaturdaten an der vermuteten Abstellposition und/oder entlang der geplanten oder aufgrund des Nutzerverhaltens des Fahrers vermuteten Route und/oder im Bereich der Ziel-Positionsdaten der geplanten oder aufgrund des Nutzerverhaltens des Fahrers vermuteten Route des Navigationssystems berücksichtigt werden.

Ist z. B. anhand der Zieldaten bekannt, dass das Fahrzeug ins Hochalpengebirge fährt, kann davon ausgegangen werden, dass die Außentemperatur über die gesamte Route kontinuierlich sinkt und am Zielort wesentlich niedriger sein wird, als am Startpunkt. Diese Information kann bei der Batterietemperaturvorhersage einen wesentlichen Beitrag leisten, da aufgrund dieser Vorhersage bereits frühzeitig, also vor dem Erreichen des Ziels bzw. der vermuteten Abstellposition des Fahrzeugs die untere Ladezustandsgrenze der Fahrzeugbatterie angehoben werden kann und dementsprechend die Ladungsmenge in der Fahrzeugbatterie daraufhin so gesteuert werden kann, dass der Ladezustand der Batterie die untere Ladezustandsgrenze zumindest nicht unterschreitet.

Alternativ oder zusätzlich können die (entlang der Route oder am Abstellort des Fahrzeugs) vorhergesagten Außentemperaturen bspw. von einer Telematik empfangen werden, welche die Information über die zukünftige Außentemperatur an der entsprechenden zukünftigen Fahrzeugposition von einem fahrzeug-externen Anbieter, insb. von einem Wetterdienst empfängt.

Der wesentliche Vorteil der Erfindung ist nun darin zusehen, dass bei der Batterietemperaturvorhersage nicht nur zeitlich gesehene zukünftige Außentemperaturdaten, sondern auch im Hinblick auf die Position des Fahrzeugs zukünftige Außentemperaturdaten berücksichtigt werden. Dadurch kann auch bei großen Außentemperaturunterschieden frühzeitig eine Anpassung der unteren Ladezustandsgrenze, und damit verbunden eine rechtzeitige Anpassung des Ladezustands der Starterbatterie ermöglicht werden, so dass ein sicherer Start gewährleistet werden kann.

## Patentansprüche

1. Verfahren zum Steuern eines Ladezustands einer Fahrzeugbatterie zur Sicherstellung der Startfähigkeit des Fahrzeugs, wobei eine Batterietemperaturvorhersage für die Fahrzeugbatterie ermittelt wird und die Batterietemperaturvorhersage verwendet wird, um eine untere Ladezustandsgrenze der Fahrzeugbatterie zu bestimmen, und wobei die Ladungsmenge in der Fahrzeugbatterie so gesteuert wird, dass der Ladezustand der Batterie die untere Ladezustandsgrenze zumindest nicht unterschreitet; **dadurch gekennzeichnet, dass** bei der Ermittlung der Batterietemperaturvorhersage diejenigen Daten eines im Fahrzeug integrierten oder mit dem Fahrzeug gekoppelten Navigationssystems berücksichtigt werden, die eine Information über eine zukünftige Position des Fahrzeugs beinhalten.

2. Verfahren nach Anspruch 1, **dadurch gekennzeichnet, dass** bei der Ermittlung der Batterietemperaturvorhersage diejenigen Daten des Navigationssystems berücksichtigt werden, die einen Hinweis auf eine vermutete Fahrzeugabstellposition beinhalten.

3. Verfahren nach einem der vorangegangenen Ansprüche, **dadurch gekennzeichnet, dass** bei der Ermittlung der Batterietemperaturvorhersage Positionsdaten einer geplanten oder einer aufgrund des Nutzerverhaltens des Fahrers vermuteten Route, insbesondere Ziel-Positionsdaten einer geplanten oder aufgrund des Nutzerverhaltens des Fahrers vermuteten Route des Navigationssystems berücksichtigt werden.

4. Verfahren nach einem der vorangegangenen Ansprüche, **dadurch gekennzeichnet, dass** die Daten des Navigationssystems bei der Ermittlung der Batterietemperaturvorhersage derart berücksichtigt werden, dass aktuelle oder vorhergesagte Außentemperaturdaten an der vermuteten Abstellposition und/oder entlang der geplanten oder aufgrund des Nutzerverhaltens des Fahrers vermuteten Route und/oder im Bereich der Ziel-Positionsdaten der geplanten oder aufgrund des Nutzerverhaltens des Fahrers vermuteten Route des Navigationssystems berücksichtigt werden.

5. Verfahren nach Anspruch 4, **dadurch gekennzeichnet, dass** die vorhergesagte Außentemperatur von einer Telematik empfangen wird, welche diese von einem fahrzeug-externen Anbieter, insb. von einem Wetterdienst empfängt.

## Claims

1. A method for controlling a state of charge of a vehicle battery to ensure the starting ability of the vehicle, wherein a battery temperature prediction for the vehicle battery is established, and the battery temperature prediction is used to determine a minimum charge state limit of the vehicle battery, and wherein the charge amount in the vehicle battery is controlled so that the state of charge of the battery at least does not fall below the minimum charge state limit, **characterised in that** while establishing the battery temperature prediction, data of a navigation system are considered which contain information about a future position of the vehicle, which navigation system is integrated into the vehicle or is coupled to the vehicle.

2. A method according to claim 1, **characterised in that** while establishing the battery temperature prediction, data of the navigation system are considered which contain an indication about an assumed parking position of the vehicle.

3. A method according to either of the preceding claims, **characterised in that** establishing the battery temperature prediction takes into consideration positional data of a planned route or of a route which is assumed based on the user behaviour of the driver, more especially destination positional data of a planned route or of a route which is assumed based on the user behaviour of the driver, of the navigation system.

4. A method according to any one of the preceding claims, **characterised in that** the data of the navigation system are considered when establishing the battery temperature prediction such that current or predicted outside temperature data in the assumed parking position and/or along the planned route or along the assumed route based on the user behaviour of the driver, and/or in the region of the destination positional data of the planned route or of the route which is assumed based on the user behaviour of the driver, of the navigation system are taken into consideration.

5. A method according to claim 4, **characterised in that** the predicted outside temperature is received by telematics which receives said predicted outside temperature from a provider outside the vehicle, more especially from a weather service.

## Revendications

1. Procédé de commande de l'état de charge d'une batterie de véhicule permettant de garantir la possibilité de démarrage de ce véhicule selon lequel une prévision de la température de la batterie du véhicule est déterminée et cette prévision de la température de la batterie est utilisée pour déterminer une limite d'état de charge inférieure de la batterie du véhicule, et la quantité de charge de la batterie du véhicule est commandée de sorte que l'état de charge de la batterie ne devienne au moins pas inférieur à la limite d'état de charge inférieure,
**caractérisé en ce que**
lors de la détermination de la prévision de la température de la batterie on prend en considération les données d'un système de navigation intégré dans le véhicule ou couplé au véhicule qui renferment une information concernant une position future du véhicule.

2. Procédé conforme à la revendication 1,
**caractérisé en ce que**
lors de la détermination de la prévision de la température de la batterie on prend en considération les données du système de navigation qui renferment une indication concernant une position d'arrêt supposée du véhicule.

3. Procédé conforme à l'une des revendications précédentes,
**caractérisé en ce que**
lors de la détermination de la prévision de la température de la batterie on prend en considération des données de position d'un itinéraire envisagé ou supposé sur le fondement du comportement d'usager du conducteur, en particulier des données de position cible d'un itinéraire du système de navigation envisagé ou supposé sur le fondement du comportement d'usager du conducteur.

4. Procédé conforme à l'une des revendications précédentes,
**caractérisé en ce que**
l'on prend en considération les données du système de navigation lors de la détermination de la prévision de température de la batterie de façon à prendre en considération des données de température extérieure actuelle ou prévue concernant la position d'arrêt supposée et/ou le long de l'itinéraire envisagé ou supposé sur le fondement du comportement d'usager du conducteur et/ou dans le domaine des données de position cible de l'itinéraire du système de navigation envisagé ou supposé sur le fondement du comportement d'usager du conducteur.

5. Procédé conforme à la revendication 4,
**caractérisé en ce que**
la température externe prévue est reçue par une télématique qui reçoit celle-ci à partir d'un prestataire externe au véhicule, en particulier d'un service météorologique.
